Europäisches Patentamt

European Patent Office

Office européen des brevets

(19)

(11) EP 0 966 800 B1

(12) **FASCICULE DE BREVET EUROPEEN**

(45) Date de publication et mention
de la délivrance du brevet:
**22.05.2002 Bulletin 2002/21**

(51) Int Cl.7: **H04B 3/46**

(86) Numéro de dépôt international:
**PCT/FR98/00464**

(21) Numéro de dépôt: **98913864.9**

(22) Date de dépôt: **09.03.1998**

(87) Numéro de publication internationale:
**WO 98/40975 (17.09.1998 Gazette 1998/37)**

(54) **DISPOSITIF DE CONTROLE DE L'EMISSION DE COURANTS PORTEURS SUR UN RESEAU BT**

STEUERVORRICHTUNG FÜR TRÄGERSTROMÜBERTRAGUNG AUF EINEM NIEDERVOLTNETZ

CONTROL DEVICE FOR THE EMISSION OF CARRIER CURRENTS ON A LOW VOLTAGE NETWORK

(84) Etats contractants désignés:
**CH DE ES FR GB IE IT LI SE**

(30) Priorité: **11.03.1997 FR 9702859**

(43) Date de publication de la demande:
**29.12.1999 Bulletin 1999/52**

(73) Titulaire: **ELECTRICITE DE FRANCE**
**75008 Paris (FR)**

(72) Inventeurs:
• **DUVAL, Guillaume**
**F-92290 Chatenay Malabry (FR)**

• **CHAFFANJON, Daniel**
**F-91230 Montgeron (FR)**

(74) Mandataire: **Fréchède, Michel et al**
**Cabinet Plasseraud**
**84, rue d'Amsterdam**
**F-75009 Paris (FR)**

(56) Documents cités:
**US-A- 5 223 795**

• **PATENT ABSTRACTS OF JAPAN vol. 007, no. 017 (E-154), 22 janvier 1983 & JP 57 174943 A (SHARP KK), 27 octobre 1982,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un dispositif de contrôle de l'émission de courants porteurs en ligne sur un réseau de distribution d'énergie électrique basse tension, réseau BT.

A l'heure actuelle, les sociétés ou organismes assurant la distribution d'énergie électrique auprès de chaque abonné à un réseau de distribution de celle-ci sont amenés à assurer de manière de plus en plus importante des opérations de gestion des services et prestations de services réalisées au bénéfice de ces abonnés.

En particulier, il est de première importance, pour ces sociétés ou organismes distributeurs, d'assurer ces opérations de manière totalement ou quasi-totalement transparente vis-à-vis des abonnés précités.

La notion de transparence ou de quasi-transparence couvre, d'une part, l'absence d'intervention physique répétitive chez les abonnés précités, afin d'occasionner un minimum de gêne dans leur activité publique, professionnelle ou privée, et, d'autre part, l'absence de mise en place de supports physiques supplémentaires de communication des données indispensables à la gestion des services ou prestations de services précités.

Ainsi, dans le cadre de la mise en oeuvre de ce type de moyens de communication, ces organismes distributeurs, tels qu'ELECTRICITE DE FRANCE en France, ont-ils développé des systèmes d'Interfaçage Clientèle Communicante, ICC, grâce à la mise en oeuvre de courants porteurs en ligne sur les réseaux de distribution d'énergie électrique BT.

Dans le cadre de la mise en oeuvre de la communication par courants porteurs, l'objectif recherché n'est pas celui d'un débit très élevé, susceptible de permettre la transmission d'images vidéo fixes ou animées, mais au contraire, d'assurer la desserte généralisée de tout abonné, indépendamment, si possible, de la configuration du réseau BT et de l'importance relative de l'énergie consommée par l'abonné considéré.

Ainsi, dans le cadre du développement des systèmes ICC, le débit de données actuellement disponible est de 300 b/s. Ce débit, en fonction des applications considérées, pourra être porté à 2400 b/s dans un avenir proche.

La transmission des données est effectuée par l'intermédiaire de trames de données synchronisées sur la fréquence "naturelle" de la tension alternative basse tension distribuée, soit 50 Hz en Europe.

Les données sont transmises grâce à la technique des courants porteurs sous forme de trames constituées de 42 octets, chaque octet étant codé par une modulation de type FSK à une première et une deuxième fréquences distinctes. Pour la distribution d'énergie électrique BT en particulier, on rappelle que la première fréquence porteuse représentative d'une valeur logique vraie est de 60,6 kHz alors que la deuxième fréquence porteuse, représentative d'une valeur complémentée de la valeur logique vraie, est de 74 kHz, la modulation étant de type S-FSK, pour *Spread Frequency Shift Keying.*

Pour les prestations de services liées au service d'éclairage public, urbain ou de collectivités, la modulation est effectuée dans une bande de fréquences dont la fréquence centrale est de 86 kHz, la modulation utilisée étant de type FSK.

Pour les prestations de services liées à la vie domestique des abonnés, c'est-à-dire les applications de domotique, la fréquence centrale est de 132,5 kHz, le plus souvent en modulation FSK. Le débit des données transmises dans ce dernier cas pourra atteindre 2400 b/s dans un avenir proche.

Les trames de données transmises, constituées de 42 octets, sont suivies d'une absence de porteuse pendant la durée de 3 octets, constituant le silence minimum séparant deux trames consécutives.

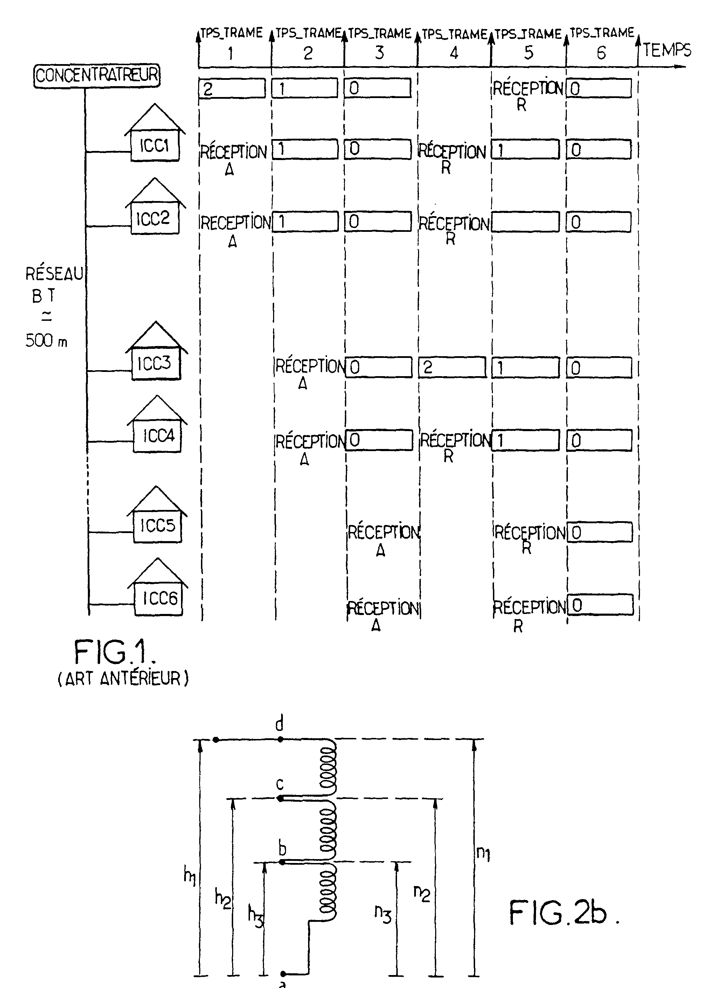

En régime de fonctionnement normal, chaque système ICC muni d'un modem CPL BT (modem à courant porteur ligne basse tension) répète les trames qu'il reçoit lorsqu'il n'est pas émetteur, avec un crédit de répétition donné, toutes les 1,2 s. Ce mode opératoire permet de proche en proche la transmission des données, d'une part, d'un centre de gestion vers tout système ICC installé sur le réseau, et réciproquement, d'autre part, ainsi qu'illustré sur la figure 1. Le protocole de communication est adapté aux difficultés de propagation sur le réseau de distribution BT. La répétition des trames, avec crédits, exploite le fonctionnement synchrone des différents systèmes ICC, afin d'éliminer tout risque de conflit. Pendant un temps-trame défini, une seule trame est présente sur le réseau BT. L'ensemble du système possède une architecture client-serveur dont le concentrateur, placé dans le poste de transformation HT/BT, est le maître. Il conserve en mémoire une table permettant d'associer un nombre de crédits (répétitions) à chaque système ICC placé chez un abonné. Le crédit maximum de 7 correspond à 8 répétitions d'une trame. Tout système ICC récepteur de manière intelligible d'une trame, qu'il en soit le destinataire ou non, le répète sur le temps-trame suivant. S'il est destinataire, le système ICC considéré émet sa réponse dans le temps-trame qui suit immédiatement la trame à crédit 0 du message incident, sinon, ce système ICC attend de recevoir une nouvelle trame avant de répéter celle-ci. La figure 1 illustre un fonctionnement correspondant pour une communication de crédit 2 entre le concentrateur et l'interface ICC$_3$ et où la valeur du crédit est indiquée dans chaque trame, réception A désignant la réception correcte du message *"aller"* et réception B celle du message *"retour".*

Dans tous les cas, le rythme de transmission des données, en particulier des trames, toutes les 1,2 secondes en régime établi, est tout-à-fait significatif d'un fonctionnement satisfaisant de la transmission par courants porteurs.

Il est également parfaitement compatible avec une appréciation auditive d'un tel rythme de transmission. En effet, le fait que le modem CPL BT d'un système ICC répète, en fonctionnement normal, ou non, en cas de dérangement, les trames de données qui lui parviennent, est significatif du bon ou du mauvais fonctionnement qui lui est imputable.

A l'heure actuelle, un agent habilité de l'organisme de distribution, chargé de la mise en service ou de l'exploitation d'un système ICC, ne dispose d'autre moyen simple de contrôle de fonctionnement que celui consistant à ôter le capot de l'appareil et d'observer en conséquence l'état des diodes électroluminescentes. Un tel mode de contrôle, purement visuel, ne fournit toutefois aucune indication relative à l'intensité des signaux, seul un matériel dispendieux et encombrant, sur site, tel que oscilloscope, analyseur de spectre ou analogue, pouvant donner tout renseignement qualitatif sur ces derniers.

L'invention a pour objet de remédier aux inconvénients et manquements de la situation actuelle.

Un autre objet de la présente invention est la mise en oeuvre d'un outil permettant le contrôle rapide et efficace du fonctionnement de tout système ICC placé dans un réseau de distribution BT, par tout préposé habilité par l'organisme distributeur, gestionnaire de ce réseau.

Un autre objet de la présente invention est également la mise en oeuvre de l'outil précité, d'une grande souplesse d'utilisation, en l'absence de toute contrainte de poids, d'encombrement, de fragilité et de prix.

Un autre objet de la présente invention est enfin, en raison de la généralisation prévisible d'installations d'interfaces ICC sur le réseau BT et de la diversité des désadaptations d'impédances introduites par les charges électriques des installations d'abonné, désadaptations particulièrement nocives à la propagation satisfaisante des courants porteurs, la mise en oeuvre d'un outil particulièrement maniable et efficace permettant de garantir la qualité de la liaison consécutive à ce type d'installation.

Le dispositif de contrôle de l'émission de courants porteurs en ligne sur un réseau de distribution d'énergie électrique basse tension, conforme à l'objet de la présente invention, dans lequel ces courants porteurs en ligne consistent en une série de salves de signaux radiofréquence à une première fréquence porteuse et à une deuxième fréquence porteuse respectivement, ces fréquences porteuses étant représentatives chacune de la valeur vraie, respectivement de la valeur complémentée de cette valeur vraie, d'un signal logique constitué en trames est remarquable en ce qu'il comporte au moins un module capteur permettant, par couplage magnétique, d'engendrer, à partir de ces courants porteurs en ligne, une série de signaux détectés haute fréquence, dont la fréquence est égale à celle de la fréquence porteuse des signaux radiofréquence et un module oscillateur local permettant d'engendrer au moins un signal radioélectrique de fréquence de référence, dont la fréquence est comprise dans la bande de fréquences des signaux détectés. Un module de changement de fréquence est prévu, lequel reçoit les signaux détectés haute fréquence ainsi que le signal radioélectrique de fréquence de référence et délivre un signal en bande de base audiofréquence. Un circuit démodulateur est en outre prévu, lequel reçoit le signal en bande de base audiofréquence et délivre un signal détecté basse fréquence, représentatif de l'enveloppe des trames constituant ces courants porteurs en ligne. Un circuit transducteur reçoit le signal détecté basse fréquence et permet d'engendrer un signal sonore représentatif de l'existence ou de la non-existence de courants porteurs sur le réseau d'énergie électrique basse tension.

Le dispositif objet de la présente invention trouve application au contrôle de l'émission ou de la réémission de courants porteurs habituellement utilisés pour la réalisation de prestations de services les plus variés, tels que gestion de la distribution d'énergie BT, éclairage public, domotique ou analogues, indépendamment de la fréquence, de la bande de fréquences et du type de modulation FSK utilisés.

Il sera mieux compris à la lecture de la description ci-après et à l'observation des dessins dans lesquels, outre la figure 1 relative à la propagation des trames de données sur un réseau BT selon l'art connu :

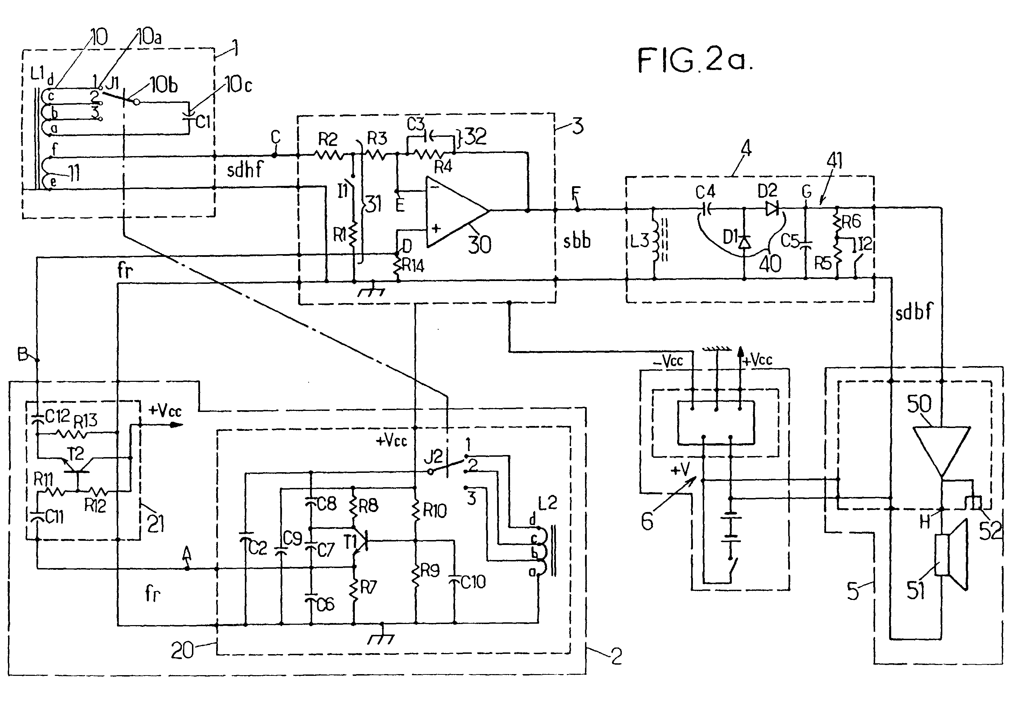

- la figure 2a représente, sous forme de schéma synoptique, un descriptif conforme à l'objet de la présente invention ;
- la figure 2b représente un détail de réalisation de la figure 2a ;

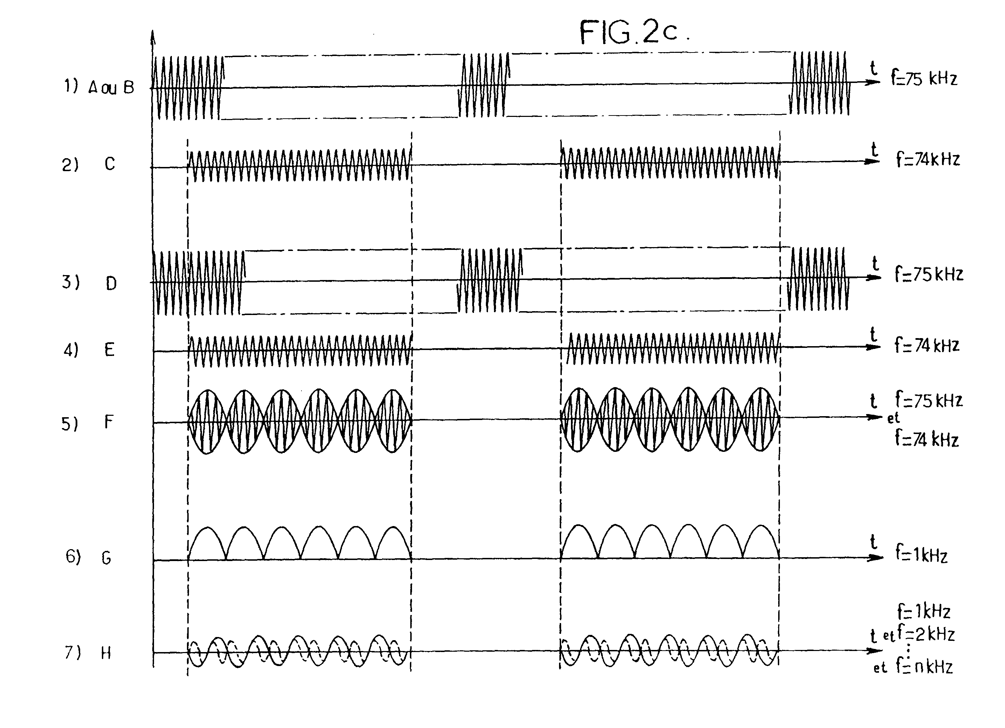

- la figure 2c représente, en ses points 1) à 7), une série de chronogrammes de signaux remarquables obtenus en des points de tests du dispositif de la figure 2a.

Une description plus détaillée d'un dispositif de contrôle de l'émission de courants porteurs en ligne sur un réseau de distribution d'énergie électrique BT, conforme à l'objet de la présente invention, sera maintenant décrite en liaison avec les figures 2a et 2b.

D'une manière générale, on rappelle que les courants porteurs en ligne consistent en une série de salves de signaux radiofréquence, ces signaux radiofréquence étant émis à une première et à une deuxième fréquence porteuse représentatives chacune de la valeur vraie, respectivement de la valeur complémentée de cette valeur vraie, d'un signal logique constitué en trames.

Ainsi, dans le cas de la distribution d'énergie électrique basse tension, on rappelle que la première fréquence peut être égale à 60,6 kHz et que la deuxième fréquence porteuse peut être égale à 74,0 kHz. Dans un tel cas, la modulation des courants porteurs en ligne est effectuée, ainsi que mentionné précédemment dans la description, selon le mode S-FSK de manière connue en soi.

Dans le cas de l'éclairage public par exemple, on rappelle que la modulation utilisée pour assurer la transmission des courants porteurs est réalisée autour d'une fréquence centrale de 86 kHz dans une bande de fréquences n'excédant pas 10% de la valeur de la fréquence centrale et que les deux fréquences porteuses choisies, c'est-à-dire la première et la deuxième fréquence porteuse, peuvent être espacées de quelques centaines de Hz par rapport à cette fréquence centrale par exemple. La valeur de la première et de la deuxième fréquence porteuse, dans ce cas-là, n'est pas en tant que telle significative et il suffit que la valeur des fréquences porteuses précitées soit comprise dans la bande de fréquences précédemment mentionnée.

Il en est de même en ce qui concerne les courants porteurs transmis en ligne dans le cas d'un service tel que la domotique, pour lequel la modulation effectuée est une modulation de type FSK pour une bande de fréquences déterminée autour de la fréquence centrale 132,5 kHz.

Selon un aspect particulièrement remarquable du dispositif de contrôle de l'émission de courants porteurs en ligne sur un réseau de distribution d'énergie électrique BT, objet de la présente invention, ainsi que représenté sur la figure 2a précitée, celui-ci comporte au moins un module capteur 1 permettant par couplage magnétique à la ligne basse tension BT d'engendrer, à partir des courants porteurs en ligne, une série de signaux détectés haute fréquence, désignée par sdhf. La fréquence porteuse des signaux détectés haute fréquence est égale à celle de la fréquence porteuse des signaux radiofréquence. Cette fréquence est donc comprise entre les valeurs égales à 50 kHz jusqu'à 150 kHz.

En outre, ainsi que représenté sur la figure 2a précitée, le dispositif comprend un module oscillateur local 2 permettant d'engendrer au moins un signal radioélectrique de fréquence de référence, désigné par fr. La fréquence du signal radioélectrique de fréquence de référence fr est comprise dans la bande de fréquences des signaux détectés haute fréquence, c'est-à-dire du signal sdhf.

Un module de changement de fréquence 3 est également prévu, lequel reçoit les signaux détectés haute fréquence sdhf ainsi que le signal radioélectrique de fréquence de référence fr et délivre alors un signal en bande de base audiofréquence, désigné par sbb.

Selon un aspect particulièrement avantageux du dispositif objet de la présente invention, on comprend que le signal en bande de base audiofréquence sbb est donc audible, le caractère d'audibilité de ce signal permettant l'exploitation du dispositif de contrôle objet de la présente invention dans les conditions de flexibilité et de simplicité qui seront détaillées ultérieurement dans la description.

Ainsi qu'on l'a en outre représenté sur la figure 2a précitée, le dispositif objet de la présente invention comprend un circuit démodulateur 4 recevant le signal en bande de base audiofréquence et délivrant un signal détecté basse fréquence, noté sdbf, lequel est représentatif de l'enveloppe des trames constituant les courants porteurs en ligne.

L'ensemble constitué par le module capteur 1, le module oscillateur 2, le module de changement de fréquence 3 et le circuit démodulateur 4 est alors complété par un circuit transducteur 5 recevant le signal détecté basse fréquence sdbf et permettant d'engendrer un signal sonore représentatif de l'existence, de la non-existence, et plus généralement de l'amplitude des courants porteurs sur le réseau d'énergie électrique basse tension à proximité duquel le module détecteur 1 a été placé.

On comprend ainsi que le signal détecté basse fréquence est en fait représentatif de la succession des trames de données transmises par les courants porteurs et que, présentant le caractère d'audibilité du signal en bande de base audiofréquence, il permet au préposé chargé de l'installation et/ou du contrôle des interfaces ICC d'effectuer cette opération grâce à une écoute appropriée de la sonorité émise par le signal détecté en basse fréquence sdbf précité.

Une description plus détaillée de l'ensemble des éléments, module capteur 1, module oscillateur local 2, module de changement de fréquence 3, circuit démodulateur 4 et circuit transducteur 5, constitutifs de la combinaison permettant la mise en oeuvre du dispositif de contrôle de l'émission de courants porteurs en ligne sur un réseau de distribution d'énergie électrique basse tension, objet de la présente invention, sera maintenant donnée en liaison avec la même figure 2a.

En ce qui concerne en premier lieu le module capteur 1, on indique que celui-ci comprend un circuit magnétique présentant une valeur de self-inductance adaptée pour entrer en résonance avec une capacité fixe Ci, quelle que soit la fréquence de travail, c'est-à-dire la fréquence du signal porteur utilisé en mode S-FSK ou FSK pur, ou en tout autre mode.

Ainsi que représenté sur la figure 2a, le module capteur 1 comprend, de manière avantageuse, dans un mode de réalisation préférentiel, un circuit magnétique primaire 10 formé par une inductance électrique ajustable, notée 10a, et un condensateur électrique fixe, noté 10c, formant avec l'inductance électrique ajustable un circuit résonant électrique. On comprend bien entendu que les caractéristiques du circuit résonant électrique sont en fait déterminées par la position d'un contacteur multiposition, noté $J_1$, portant la référence 10b, ce contacteur ou commutateur en ses positions 1, 2 ou 3 permettant de choisir la fréquence de résonance appropriée entre la self-inductance $L_1$ et la capacité $C_1$. Cette fréquence de résonance est typiquement égale en fonction de la position du commutateur $J_1$, soit à 74 kHz, soit à 86 kHz ou encore à 132,5 kHz en fonction de la position retenue.

Le circuit magnétique primaire formé par l'in-

ductance électrique $L_1$ est couplé à un circuit magnétique secondaire, portant la référence 11, les inductances primaire 10a et secondaire 11 étant couplées par inductance mutuelle. Ainsi, le circuit magnétique secondaire 11 délivre les signaux détectés haute fréquence, c'est-à-dire le signal sdhf mentionné précédemment dans la description.

En ce qui concerne le module oscillateur local 2, on indique que celui-ci, ainsi que représenté en figure 2a, peut avantageusement être formé par un module oscillateur transistorisé 20 proprement dit, à résistance/self-inductance et capacité électrique, suivi d'un étage tampon 21 connecté en sortie du module oscillateur proprement dit 20 et délivrant le signal radioélectrique de fréquence de référence fr.

Ainsi que représenté sur la figure 2a, on comprend que le module oscillateur proprement dit 20 comporte un commutateur, noté $J_2$, lequel est couplé mécaniquement avec le commutateur noté $J_1$ du module coupleur 1. Bien entendu, les commutateurs $J_1$ et $J_2$, c'est-à-dire le commutateur 10b du module détecteur 1 et le commutateur $J_2$ du module proprement dit 20, sont commandés simultanément par le préposé afin d'adapter, d'une part, la fréquence de résonance du module capteur 1, et, d'autre part, la fréquence d'oscillation du module oscillateur proprement dit 20 à celle de la fréquence effective des courants porteurs transitant sur la ligne du réseau de distribution BT.

Le module oscillateur proprement dit consiste essentiellement en un élément actif constitué par un transistor $T_1$, ce transistor $T_1$ étant monté en oscillateur de type HARTLEY au moyen d'une résistance d'émetteur $R_7$, d'une résistance de collecteur $R_8$, de résistances de polarisation $R_{10}$ et $R_9$ et de capacités de valeur adaptée, notées $C_2$, $C_6$, $C_7$, $C_8$, $C_9$ et $C_{10}$. Le commutateur $J_2$ assure la liaison entre, l'électrode de collecteur du transistor $T_1$ par l'intermédiaire de la capacité $C_8$ et l'électrode de base de ce même transistor $T_1$ par l'intermédiaire de la capacité $C_{10}$ et de l'inductance d'oscillation $L_2$. L'inductance d'oscillation $L_2$ comprend des prises intermédiaires reliées aux bornes de commutation de l'interrupteur-commutateur $J_2$. Les positions 1, 2, 3 du commutateur $J_2$ correspondent aux positions 1, 2, 3 du commutateur $J_1$.

La sélection d'une position appropriée du commutateur J1 ou $J_2$ modifie en conséquence la valeur de la self-inductance $L_1$ au niveau du module capteur 1 ainsi que la valeur de l'inductance $L_2$ effectuée. Pour un nombre de spires égal à $n_1$, $n_2$, $n_3$ ainsi que représenté en figure 2b, on a les relations :

$$f_2/f_1 = n_1/n_2 \qquad \text{et} \qquad f_3/f_2 = n_2/n_3.$$

Lorsque la condition de résonance est remplie, c'est-à-dire $LC\Omega_0^2 = 1$, où L représente la valeur équivalente de la self-inductance $L_2$ entre la prise intermédiaire considérée et la tension de référence, C représente la capacité équivalente ramenée, constitutive de l'oscillateur de type HARTLEY, il vient, avec $L = k.n^2$, la relation ci-après :

$$k.n^2.4\pi^2 f^2 = 1/C.$$

On montre alors que :

$$nf = \frac{1}{2\pi} \cdot \frac{1}{\sqrt{kC}} = \text{constante sensiblement pour}$$

chaque position intermédiaire avec $n = n_1$, $n_2$ ou $n_3$.

Le coefficient de surtension Q, proportionnel à L, valeur de l'inductance sélectionnée par le commutateur J à fréquence constante, doit être adapté pour rendre le module capteur 1 suffisamment sélectif pour n'entendre que la fréquence pertinente tout en garantissant une bande suffisamment large pour l'audition des signaux modulés.

Ainsi, des essais ont montré qu'il était possible de prendre un nombre total de spires pour constituer la self-inductance $L_1$ ou $L_2$ égal à $n_1$ = 18 pour la fréquence 74 kHz, $n_2$ = 16 pour 86 kHz et $n_3$ = 10 pour 132,5 kHz.

Compte tenu des relations précédentes, on obtient alors les valeurs numériques ci-après :

$$18\text{x}74 = 1332 \; ; \; 16\text{x}86 = 1376 \; ; \; 10\text{x}132,5 = 1235$$

et donc une valeur sensiblement constante compte tenu du fait que le facteur de qualité Q du circuit résonant est inférieur ou égal à 10.

En ce qui concerne l'étage tampon 21, on indique que celui-ci permet avant tout de réaliser une fonction d'étage séparateur entre le module oscillateur proprement dit 20 et le circuit d'entrée de l'étage de changement de fréquence 3 couplé au circuit détecteur 1. L'étage tampon 21 est alors, ainsi que représenté en figure 2a, constitué par un transistor $T_2$ monté en collecteur commun et dont la liaison HF est réalisée par l'intermédiaire de capacités de liaison $C_{11}$ et $C_{12}$. Ainsi, l'étage tampon 21 présente une entrée à haute impédance, laquelle est branchée en parallèle sur la sortie du module oscillateur proprement dit 20, et une sortie basse impédance, laquelle est alors branchée directement sur les circuits d'entrée de l'étage mélangeur 3.

En ce qui concerne le module de changement de fréquence 3, on indique que celui-ci comporte au moins, ainsi que représenté en figure 2a, un amplificateur opérationnel 30 monté en amplificateur différentiel et muni d'une entrée inverseuse et d'une entrée non-inverseuse. L'entrée non-inverseuse est reliée à la tension de référence par l'intermédiaire d'une résistance $R_{14}$ et est directement connectée à la sortie basse impédance de l'étage tampon 21 précédemment mentionné. L'entrée non-inverseuse reçoit ainsi le signal radioélectrique de fréquence de référence fr délivré par le module oscillateur proprement dit 20 et, de manière plus spécifique, par l'étage tampon 21 dans les conditions de séparation d'impédance précédemment mentionnées dans la description.

En outre, ainsi que représenté à la même figure 2a, le module 3 de changement de fréquence comporte un diviseur potentiométrique 31, lequel est formé par un pont résistif $R_1$, $R_2$, $R_3$ commandé par un interrupteur $I_1$. La sortie du pont résistif par l'intermédiaire de la résistance $R_3$ est interconnectée à l'entrée inverseuse de l'amplificateur opérationnel 30. La commande de l'interrupteur $I_1$ en position fermée, respectivement ouverte, permet de régler la sensibilité HF de l'ensemble, c'est-à-dire l'introduction d'un gain faible pour $I_1$ en position fermée et l'introduction d'un gain fort pour $I_1$ en position ouverte. Le diviseur potentiométrique 31 permet ainsi d'appliquer des signaux haute fréquence ajustés à l'entrée inverseuse de l'amplificateur opérationnel 30. Enfin, le module 3 de changement de fréquence comporte un circuit de contre-réaction, noté 32, formé par une résistance $R_4$ en parallèle avec une capacité $C_3$, la résistance $R_4$ et la capacité $C_3$ ayant une valeur adaptée pour assurer, d'une part, la définition du gain de l'ensemble, et, d'autre part, la stabilité du système amplificateur.

Ainsi, le mode opératoire du module de changement de fréquence peut être résumé de la façon ci-après : pour un signal détecté haute fréquence sdhf et pour un signal de fréquence de référence fr dont la fréquence est sensiblement voisine, le module 3 de changement de fréquence délivre le signal en bande de base sbb dont la fréquence est égale à la différence des fréquences du signal radioélectrique de référence fr et du signal détecté haute fréquence sdhf. Ce signal constitue en fait l'enveloppe d'un signal dont la fréquence porteuse est égale à la moyenne arithmétique des fréquences du signal détecté haute fréquence sdhf et du signal radioélectrique de référence fr.

A titre d'exemple non limitatif et pour les positions 1, 2, 3 des commutateurs $J_1$ et $J_2$ tels que représentés en figure 2a, la valeur de fréquence du signal radioélectrique de fréquence de référence fr est prise égale à, successivement :

- fr = 75 kHz pour la distribution d'énergie électrique,
- fr = 84,375 kHz dans le cas de l'éclairage public,
- fr = 135 kHz dans le cas de la domotique.

On comprend ainsi que le signal en bande de base audiofréquence sbb comprend une enveloppe, laquelle est représentative de l'enveloppe des trames transmises par le réseau de distribution BT.

En ce qui concerne enfin le circuit démodulateur 4, on indique que celui-ci peut comprendre avantageusement un circuit de détection quasi-crête permettant d'assurer un doublement de la valeur de tension crête détectée et portant la référence 40 sur la figure 2a.

Ce circuit reçoit le signal en bande de base audiofréquence et délivre un signal quasi-crête ainsi qu'il sera décrit ultérieurement dans la description. Ce circuit 40 est formé avantageusement par une self-inductance $L_3$ connectée en parallèle sur les bornes d'entrée du circuit démodulateur 4 ainsi qu'une capacité $C_4$ et un circuit à diodes $D_1$, $D_2$, la diode $D_1$ étant connectée entre la borne de sortie de la capacité $C_4$ et la tension de référence, et la diode $D_2$ étant connectée en liaison afin de transmettre les alternances positives du signal détecté. Le circuit de détection quasi-crête 40 est alors suivi par un circuit du type diviseur potentiométrique, portant la référence 41, lequel est formé, ainsi que représenté sur la figure 2a, par une capacité électrique $C_5$ en parallèle sur la sortie de la diode $D_2$ et la tension de référence ainsi que par deux résistances en série $R_6$, $R_5$ connectées en parallèle sur la capacité $C_5$, un interrupteur $I_2$ court-circuitant la résistance $R_5$. Le rôle de l'interrupteur $I_2$, en position ouverte ou fermée, permet de régler la valeur d'amplitude du signal BF ainsi détecté, la position fermée réduisant le niveau de ce signal alors que la position ouverte de ce même interrupteur $I_2$ augmente le niveau du signal BF ainsi délivré par le circuit démodulateur 4.

On comprend ainsi que le circuit démodulateur 4 permet de récupérer l'enveloppe des trames transitant sur le réseau de distribution BT.

De manière plus spécifique, on indique que l'ouverture de l'interrupteur $I_2$ provoque la chute de tension basse fréquence aux bornes de la capacité $C_5$. La pondération spectrale du signal basse fréquence attaquant l'entrée du circuit transducteur 5 se trouve ainsi modifiée. En effet, la constante de temps devient alors $R_6.C_5$, ce qui dégrade le filtrage des hautes fréquences résiduelles et améliore ainsi la transmission des sons aigus vers le module transducteur 5 précité. Le volume sonore final est toutefois fixé lui aussi au moyen de l'interrupteur $I_2$. En effet, lorsque les signaux ont une amplitude élevée, le gain nécessaire est alors faible et l'interrupteur $I_2$ peut alors être fermé. Les composantes aiguës sont alors supportées facilement. En revanche, lorsque le signal reçu présente un niveau faible, au niveau du module capteur 1, il est alors nécessaire d'introduire un gain plus important, ce qui, en l'absence de correction de tonalité, rendrait les bruits aigus plus perceptibles à l'oreille et donc plus désagréables.

En ce qui concerne le circuit transducteur 5, celui-ci comporte au moins, ainsi que représenté en figure 2a, un circuit 50 amplificateur proprement dit, amplificateur analogique basse-fréquence, recevant le signal détecté basse fréquence sdbf. Le circuit transducteur 5 comporte également un haut-parleur 51 connecté en sortie de l'amplificateur analogique basse fréquence et permettant d'engendrer le signal sonore représentatif de la succession des trames transmises.

Outre le haut-parleur 51 précédemment mentionné, la sortie de l'amplificateur 50 peut être également raccordée à une prise 52 telle qu'une prise BNC permettant le branchement de tout appareil de mesure ou de représentation graphique. Ainsi, pour une fréquence du signal radioélectrique de fréquence de référence fr égale à 135 kHz pour $n_3$ = 10 spires, le haut-parleur 51 émet un signal sonore dont la fréquence fondamentale est égale :

- à 2,5 kHz pour le signal BF des trames d'un signal domotique,
- à 1,625 kHz pour le signal BF des trames d'un signal éclairage public,
- à 1 kHz pour le signal BF des trames distribution BT.

En ce qui concerne l'alimentation en énergie électrique de l'ensemble, on indique que celle-ci est réalisée à partir d'un bloc d'alimentation 6, lequel, bien que ne présentant pas de caractéristique déterminante, peut être illustré de la façon ci-après. Le bloc d'alimentation 6 comprend un interrupteur marche/arrêt permettant au préposé la mise en marche de l'appareil par simple pression, une batterie d'accumulateurs, telle qu'une pile, délivrant une tension Vp normalisée. Cette tension peut être égale à 6 volts par exemple. Le bloc d'alimentation 6 comprend également un module adaptateur de tension commercialisé par la société TRACO POWER PRODUCTS sous la référence TEF0522. Cet adaptateur de tension reçoit la tension d'alimentation de pile Vp et délivre par rapport à une tension de référence constituant la masse de l'appareil à 0 volt, d'une part, une première tension VCC et, d'autre part, la tension d'alimentation opposée en valeur algébrique -VCC. Les tensions +VCC et -VCC sont distribuées auprès de chacun des modules précédemment décrits dans la description, en particulier le module changeur de fréquence 3, lequel utilise pour l'alimentation de l'amplificateur opérationnel 30 les valeurs +VCC et -VCC précitées.

Sur la figure 2c, on a représenté aux points de test A ou B de la figure 2a, au point 1) de la figure 2c précitée, le signal à fréquence de référence radioélectrique fr délivré par le module oscillateur proprement dit ou par l'étage tampon 21 pour une fréquence égale à 75 kHz par exemple.

Au point 2) de la même figure 2c, on a représenté le signal détecté haute fréquence sdhf délivré au point C de la figure 2a. On comprend que le signal sdhf est un signal périodique à la période trame, chaque trame correspondant à une salve de fréquences porteuses f = 74 kHz dans l'exemple décrit.

Au point 3) de la figure 2c, on a représenté le signal présent au point de test D, c'est-à-dire au point d'entrée non-inverseuse de l'amplificateur opérationnel 30 du module de changement de fréquence 3, ce signal étant identique au signal relevé aux points de test A ou B.

Au point 4) de la figure 2c, on a représenté le signal présent au point de test E du module de changement de fréquence 3, c'est-à-dire à l'entrée inverseuse de l'amplificateur opérationnel 30. Ce signal est sensiblement identique à celui représenté au point 2) de cette même figure 2c au point de test C, compte tenu de la position ouverte ou fermée de l'interrupteur $I_1$ à une différence d'amplitude près.

Au point 5) de la figure 2c, on a représenté le signal présent au point de test F délivré par le module de changement de fréquence 3, c'est-à-dire le signal en bande de base audiofréquence sbb. Ce signal représente bien l'enveloppe du battement entre la fréquence du signal détecté haute fréquence sdhf et le signal radioélectrique de référence fr supporté par une fréquence porteuse égale à la moyenne arithmétique des fréquences porteuses et des signaux précités.

Au point 6) de la figure 2c, on a représenté le signal délivré dans le circuit démodulateur 4 par le circuit de détection quasi-crête 40, ce circuit permettant en fait de délivrer l'enveloppe redressée à un facteur d'amplitude près du signal en bande de base sbb audiofréquence présent au point de test F.

Enfin, au point 7) de la figure 2c, on a représenté, au point de test H de la figure 2a, c'est-à-dire en sortie de l'amplificateur 50 basse fréquence, le signal obtenu correspondant en fait à la fréquence fondamentale de ce signal, lequel est appliqué sur le haut-parleur 51 ou, le cas échéant, sur la sortie 52 ainsi que mentionné précédemment dans la description.
On comprend que, outre le signal à fréquence fondamentale précédent, il existe en sortie les composantes du signal représenté au point de test G correspondant aux harmoniques de ce fondamental, le signal résultant correspondant en fait à une décomposition en série de Fourier du signal présent au point de test G précité.

On a ainsi décrit un dispositif de contrôle de l'émission de courants porteurs en ligne sur un réseau de distribution d'énergie électrique basse tension particulièrement performant, ce dispositif présentant de nombreux avantages par rapport aux techniques connues de l'art antérieur.

Parmi les avantages précités, on peut citer successivement :

- robustesse de l'appareil mis en oeuvre, en raison de l'absence de quartz pour réaliser l'oscillateur local, ce qui permet de rendre l'appareil ainsi mis en oeuvre robuste et bien adapté aux exigences du travail de terrain. La qualité de robustesse est également conférée à l'appareil, objet de la présente invention, en raison de la quasi-inexistence des réglages en usine. Une fois que les valeurs des sensibilités ont été définies, les ajustements sont quasi-inexistants et le dispositif peut être fabriqué en série sans intervention de réglage.
- simplicité : la simplicité d'utilisation est grandement facilitée en raison de la réduction des boutons ou manettes de commande. Seul un interrupteur marche/arrêt est prévu, accompagné d'un commutateur de fréquence qui permet de placer le capteur et l'oscillateur sur la fréquence voulue en fonction de la fréquence de travail considérée. Les interrupteurs ou potentiomètres pour régler la sensibilité HF ou la sensibilité BF sont d'un maniement particulièrement simple. Le basculement des interrupteurs $I_1$ et $I_2$ précités peut être choisi et la valeur des résistances correspondantes, de façon que l'amplitude de variation des niveaux sonores varie de 20 dB.

- maniabilité : les dimensions de l'appareil mis en oeuvre sont celles d'un outil, et donc sensiblement plus réduites que n'importe quel équipement d'analyse de signal tel qu'un oscilloscope ou un analyseur de spectre. En outre, le poids de l'outil est faible et dû à un simple circuit imprimé muni de ses composants électroniques et de piles d'alimentation adaptées.

- durée de vie : l'appareil, objet de la présente invention, peut être alimenté à partir de quatre piles de 1,5 volt, la tension Vp étant égale à 6 volts pour un fonctionnement de plusieurs dizaines d'heures en l'absence de tout remplacement des piles.

- coût : les composants électroniques mis en oeuvre sont simples, vendus couramment dans le commerce, et donc très peu onéreux.

- sécurité : le module capteur magnétique 1 est prévu de façon à fonctionner en l'absence de toute connexion au réseau électrique basse tension, contrairement aux appareils de mesure classiques. Ce mode opératoire garantit une utilisation en toute sécurité pour le préposé. En outre l'utilisation de l'appareil, objet de la présente invention, est totalement transparente pour les systèmes CPL des interfaces ICC en fonctionnement.

- le dispositif objet de l'invention permet également une valorisation rapide de l'expertise et de la qualification des préposés ou agents d'exploitation en augmentant la notion de savoir-faire telle qu'elle se manifeste dans le cadre d'un métier au vrai sens du terme.

Ainsi, pour un préposé habilité, le dispositif objet de la présente invention, permet d'identifier rapidement la cause d'un dysfonctionnement de tout CPL équipant une interface ICC. Ces dysfonctionnements peuvent être :

- une absence de tout signal reçu distinctement, mettant en évidence une distance trop importante entre l'équipement CPL, c'est-à-dire l'interface ICC précédent et celui qui fait l'objet des investigations par le préposé ;

- un signal faible dont la durée est sensiblement égale à un temps de trame suivi de trames plus fortes et caractéristique d'un fonctionnement correct de l'appareil CLP et de l'interface ICC qui lui est associé ;

- une succession de signes faibles reçus en l'absence d'augmentation d'un niveau révèle l'absence de répétition de l'interface ICC soumis à investigation, et vraisemblablement une déficience fonctionnelle de cet équipement ICC ;

- la présence de bruits dans la bande de fréquences de travail est rapidement mise en évidence par des sons significatifs venant se superposer à la mélodie régulière des trames.

## Revendications

1. Dispositif de contrôle de l'émission de courants porteurs en ligne sur un réseau de distribution d'énergie électrique basse tension, lesdits courants porteurs en ligne consistant en une série de salves de signaux radiofréquence à une première et à une deuxième fréquence porteuse respectivement, représentatives chacune de la valeur vraie respectivement de la valeur complémentée de cette valeur vraie d'un signal logique constitué en trames, **caractérisé en ce que** ledit dispositif comporte au moins :

  - des moyens capteurs (1) permettant, par couplage magnétique, d'engendrer à partir desdits courants porteurs en ligne, une série de signaux détectés haute fréquence, dont la fréquence porteuse est égale à celle de la fréquence porteuse des signaux radiofréquence ;

  - des moyens oscillateurs locaux (2) permettant d'engendrer au moins un signal radioélectrique de fréquence de référence, dont la fréquence est comprise dans la bande de fréquences des signaux détectés ;

  - des moyens de changement de fréquence (3) recevant lesdits signaux détectés haute fréquence et ledit signal radioélectrique de fréquence de référence et délivrant un signal en bande de base audiofréquence ;

  - un circuit démodulateur (4) recevant ledit signal en bande de base audiofréquence et délivrant un signal détecté basse fréquence représentatif de l'enveloppe des trames constituant lesdits courants porteurs en ligne ;

  - un circuit transducteur (5) recevant le signal détecté basse fréquence et permettant d'engendrer un signal sonore représentatif de l'existence ou de la non-existence de courants porteurs sur le réseau d'énergie électrique basse tension.

2. Dispositif de contrôle selon la revendication 1, **caractérisé en ce que** lesdits moyens capteurs (1) comportant au moins :

  - un circuit magnétique primaire (10) formé par une inductance électrique ajustable (10a) et un condensateur électrique fixe (10c), formant avec l'inductance électrique ajustable un circuit résonant électrique ;

- un circuit magnétique secondaire (11), couplé au circuit magnétique primaire par inductance mutuelle, ledit circuit magnétique secondaire (11) délivrant lesdits signaux détectés haute fréquence.

3. Dispositif de contrôle selon la revendication 1 ou 2, **caractérisé en ce que** lesdits moyens oscillateurs locaux (2) sont formés par :

- un module oscillateur transistorisé (20) à résistance self-inductance et capacité électrique ;
- un étage tampon (21) connecté en sortie dudit module oscillateur (20) et délivrant ledit signal radioélectrique de fréquence de référence.

4. Dispositif selon l'une des revendications 1 à 3, **caractérisé en ce que** lesdits moyens de changement de fréquence (3) comportent au moins :

- un amplificateur opérationnel (30) monté en amplificateur différentiel muni d'une entrée inverseuse et d'une entrée non-inverseuse, l'entrée non-inverseuse étant reliée à la tension de référence par l'intermédiaire d'une résistance et recevant ledit signal radioélectrique de fréquence de référence ;
- un diviseur potentiométrique (31) recevant lesdits signaux détectés haute fréquence et permettant d'appliquer des signaux haute fréquence ajustés à ladite entrée inverseuse ;
- un circuit de contre-réaction (32) à résistance capacité, reliant la sortie dudit amplificateur opérationnel (30) et ladite entrée inverseuse et permettant d'établir le gain d'amplification, la sortie dudit amplificateur opérationnel (30) délivrant ledit signal en bande de base audiofréquence.

5. Dispositif selon l'une des revendications 1 à 4, **caractérisé en ce que** ledit circuit démodulateur (4) comprend :

- un circuit de détection quasi-crête (40) recevant ledit signal en bande de base audiofréquence ;
- un circuit diviseur potentiométrique (41) délivrant à partir dudit circuit d'alignement à diodes ledit signal détecté basse fréquence.

6. Dispositif selon l'une des revendications 1 à 5, **caractérisé en ce que** ledit circuit transducteur (5) comporte au moins :

- un circuit amplificateur analogique basse fréquence (50) recevant ledit signal détecté basse fréquence ;

- un haut parleur (51) connecté en sortie dudit amplificateur analogique basse fréquence (50) et permettant d'engendrer ledit signal sonore.

7. Dispositif selon la revendication 6, **caractérisé en ce que** le circuit transducteur (5) comporte une borne de connexion (52) reliée à la sortie de l'amplificateur basse fréquence.

**Patentansprüche**

1. Steuervorrichtung für die leitungsgebundene Trägerstromübertragung auf einem Niedervoltnetz, wobei die leitungsgebundenen Trägerströme aus einer Reihe von Radiofrequenzsignalstößen mit einer ersten und einer zweiten Trägerfrequenz bestehen, die jeweils für den wahren Wert des Werts repräsentativ sind, der komplementär zu diesem wahren Wert eines gerasterten logischen Signals ist, **dadurch gekennzeichnet, dass** die Vorrichtung zumindest aufweist:

- Fühlermittel (1), die es durch magnetische Kupplung erlauben, ausgehend von den leitungsgebundenen Trägerströmen eine Reihe von ermittelten Hochfrequenzsignalen zu erzeugen, deren Trägerfrequenz gleich der Trägerfrequenz der Radiofrequenzsignale ist;
- lokale Oszillatormittel (2), die es erlauben, zumindest ein radioelektrisches Signal mit einer Referenzfrequenz zu erzeugen, dessen Frequenz im Frequenzband der ermittelten Signale enthalten ist;
- Frequenzänderungsmittel (3), welche die ermittelten Hochfrequenzsignale und das radioelektrische Signal mit der Bezugsfrequenz empfangen und ein Signal im Audiofrequenzbasisband liefern;
- eine Demodulatorschaltung (4), die das Audiofrequenzbasisbandsignal empfängt und ein ermitteltes Signal niedriger Frequenz liefert, das für die Hülle der Raster repräsentativ ist, welche die leitungsgebundenen Trägerströme bilden;
- eine Umformerschaltung (5), die das ermittelte Niederfrequenzsignal empfängt und es erlaubt, ein Schallsignal zu erzeugen, das für das Vorliegen oder das Nichtvorliegen von Trägerströmen auf dem Niedervoltnetz repräsentativ ist.

2. Steuervorrichtung nach Anspruch 1, **dadurch gekennzeichnet, dass** die Fühlermittel (1) zumindest folgendes umfassen:

- einen primären Magnetkreis (10), der durch eine einstellbare elektrische Induktanz (10a) und einem unveränderlichen elektrischen Kondensator (10c) gebildet ist, der mit der einstellbaren elektrischen Induktanz einen elektrischen Resonanzkreis bildet;

- einen sekundären Magnetkreis (11), der mit dem primären Magnetkreis durch eine gemeinsame Induktanz verbunden ist, wobei der sekundäre Magnetkreis (11) die ermittelten Hochfrequenzsignale liefert.

3. Steuervorrichtung nach Anspruch 1 oder 2, **dadurch gekennzeichnet, dass** die lokalen Oszillatormittel (2) durch folgendes gebildet sind:

- ein transistorisiertes Oszillatormodul (20) mit Selbstinduktanzwiderstand und elektrischer Kapazität;
- eine Dämpferstufe (21), die mit dem Ausgang des Oszillatormoduls (20) verbunden ist und das radioelektrische Signal mit der Referenzfrequenz liefert.

4. Vorrichtung nach einem der Ansprüche 1 bis 3, **dadurch gekennzeichnet, dass** die Frequenzänderungsmittel (3) zumindest folgendes aufweisen:

- einen Operationsverstärker (30) in Gestalt eines Differenzverstärkers, der einen invertierenden Eingang und einen nichtinvertierenden Eingang aufweist, wobei der nichtinvertierende Eingang mit der Referenzspannung unter Zwischenschaltung eines Widerstands verbunden ist und das radioelektrische Signal mit der Referenzfrequenz empfängt;
- einen potentiometrischen Teiler (31), der die ermittelten Hochfrequenzsignale empfängt und es erlaubt, eingestellte Hochfrequenzsignale an den invertierenden Eingang anzulegen;
- eine Gegenreaktionsschaltung (32) mit kapazitivem Widerstand, der den Ausgang des Operationsverstärkers (30) mit dem invertierenden Eingang verbindet und es erlaubt, den Verstärkungsfaktor festzulegen, wobei der Ausgang des Operationsverstärkers (30) das Audiofrequenzbasisbandsignal liefert.

5. Vorrichtung nach einem der Ansprüche 1 bis 4, **dadurch gekennzeichnet, dass** die Demodulatorschaltung (4) folgendes aufweist:

- eine Quasi-Spitzenwertermittlungsschaltung (40), die das Audiofrequenzbasisbandsignal empfängt;
- eine potentiometrische Teilerschaltung (41), die ausgehend von der Diodenabgleichschaltung das ermittelte Niederfrequenzsignal liefert.

6. Vorrichtung nach einem der Ansprüche 1 bis 5, **da-**

**durch gekennzeichnet, dass** die Umformerschaltung (5) zumindest folgendes aufweist:

- eine analoge Niederfrequenzverstärkerschaltung (50), die das ermittelte Niederfrequenzsignal empfängt;
- einen Lautsprecher (51), der mit dem Ausgang des analogen Niederfrequenzverstärkers (50) verbunden ist und es erlaubt, das Schallsignal zu erzeugen.

7. Vorrichtung nach Anspruch 6, **dadurch gekennzeichnet, dass** die Umformerschaltung (5) einen Verbindungsanschluss (52) aufweist, der mit dem Ausgang des Niederfrequenzverstärkers verbunden ist.

**Claims**

1. A device for monitoring the transmission of power line carrier currents on a low voltage electrical power distribution network, said power line carrier currents comprising a series of bursts of radio frequency signals at first and second carrier frequencies respectively representative of the true value of a logical signal in the form of frames and the complemented value of that true value, **characterized in that** said device includes:

- sensor means (1) employing magnetic coupling to generate from said power line carrier currents a series of detected high frequency signals the carrier frequency of which is equal to the carrier frequency of the radio frequency signals;
- local oscillator means (2) for generating at least one radio frequency reference frequency signal the frequency of which is in the frequency band of the detected signals;
- frequency changer means (3) receiving said detected high frequency signals and said radio frequency reference frequency signal and delivering a baseband audio frequency signal;
- a demodulator circuit (4) receiving said baseband audio frequency signal and delivering a detected low frequency signal representative of the envelope of the frames constituting said power line carrier currents; and
- a transducer circuit (5) receiving the detected low frequency signal and generating a sound signal representative of the existence of the non-existence of power line carrier currents on the low voltage electrical power distribution network.

2. A monitoring device according to claim 1 **characterized in that** said sensor means (1) include:

- a primary magnetic circuit (10) comprising a variable inductor (10a) and a fixed capacitor (10c) forming a resonant circuit with the variable inductor; and
- a secondary magnetic circuit (12) coupled to the primary magnetic circuit by their mutual inductance, said secondary magnetic circuit (11) delivering said detected high frequency signals.

3. A monitoring device according to claim 1 or claim 2 **characterized in that** said local oscillator means (2) comprise:

- a transistorized oscillator module (20) including resistors, inductors and capacitors; and
- a buffer stage (21) connected to the output of said oscillator module (20) and delivering said radio frequency reference frequency signal.

4. A device according to any one of claims 1 to 3 **characterized in that** said frequency changer means (3) include:

- an operational amplifier (30) configured as a differential amplifier having an inverting input and a non-inverting input, the non-inverting input being connected to the reference voltage via a resistor and receiving said radio frequency reference frequency signal;
- a potentiometer voltage divider (31) receiving said detected high frequency signals and applying adjusted high frequency signals to said inverting input; and
- a resistor-capacitor feedback circuit (32) connecting the output of said operational amplifier (30) and said inverting input and defining the gain of the amplifier, the output of said operational amplifier (30) delivering said baseband audio frequency signal.

5. A device according to any one of claims 1 to 4 **characterized in that** said demodulator circuit (4) includes:

- a quasi-peak detector circuit (40) receiving said baseband audio frequency signal; and
- a potentiometer voltage divider (41) circuit delivering from said diode alignment circuit said detected low frequency signal.

6. A device according to any one of claims 1 to 5 **characterized in that** said transducer circuit (5) includes:

- an analogue low frequency amplifier circuit (50) receiving said detected low frequency signal; and

- a loudspeaker (51) connected to the output of said analogue low frequency amplifier (50) and generating said sound signal.

7. A device according to claim 6 **characterized in that** the transducer (5) circuit has a connecting terminal (52) connected to the output of the low frequency amplifier.

| | TPS_TRAME 1 | TPS_TRAME 2 | TPS_TRAME 3 | TPS_TRAME 4 | TPS_TRAME 5 | TPS_TRAME 6 | TEMPS |
|---|---|---|---|---|---|---|---|

CONCENTRATEUR

ICC1
ICC2
ICC3
ICC4
ICC5
ICC6

RÉSEAU
B T
≃
500 m

## FIG.1.
(ART ANTÉRIEUR)

## FIG.2b.

d
c
b

$h_1$ $h_2$ $h_3$ $n_3$ $n_2$ $n_1$

FIG.2a.

EP 0 966 800 B1

# FIG.2c.

1) A ou B          $\longrightarrow t$  f=75 kHz

2) C          $\longrightarrow t$  f=74 kHz

3) D          $\longrightarrow t$  f=75 kHz

4) E          $\longrightarrow t$  f=74 kHz

5) F          $\longrightarrow t$  f=75 kHz
              et
              f=74 kHz

6) G          $\longrightarrow t$  f=1 kHz

7) H          f=1 kHz
              t et f=2 kHz
              $\vdots$
              et f=n kHz

EP 0 966 800 B1